# EUROPEAN PATENT APPLICATION

(11) **EP 4 807 686 A1**
(43) Date of publication of application: **16.09.2026**
(21) Application number: 24900360.9
(22) Date of filing: 06.11.2024
(51) Int. Cl.: G06T 19/00, H04N 7/18

(54) **VEHICLE SURROUNDING ENVIRONMENT DISPLAY DEVICE, CONTROL METHOD FOR VEHICLE SURROUNDING ENVIRONMENT DISPLAY DEVICE, AND PROGRAM**

(30) Priority: 07.12.2023 JP 2023207081
(71) Applicant: TOYOTA JIDOSHA KABUSHIKI KAISHA, Toyota-Shi, Aichi-Ken 471-8571 (JP); DENSO CORPORATION, Kariya-shi, Aichi 448-8661 (JP)
(72) Inventor: YAMAMOTO Yuki, Toyota-shi, Aichi 471-8571 (JP); MAEJIMA Kohei, Toyota-shi, Aichi 471-8571 (JP); FURUSE Hideaki, Kariya-shi, Aichi 448-0029 (JP); OKADA Naoyuki, Kariya-shi, Aichi 448-0029 (JP)
(74) Representative: Cabinet Beau de Loménie
(86) International application number: PCT/JP2024/039493
(87) International publication number: WO 2025/121065

(57) **Abstract**

A vehicle surrounding environment display device generates a virtual space corresponding to a surrounding environment of a host vehicle based on detection information of an external sensor of the host vehicle and displays an image in the virtual space as viewed from a virtual viewpoint operated by a user of the host vehicle on a display, in which a host vehicle icon corresponding to the host vehicle is placed in the virtual space, and the vehicle surrounding environment display device includes an image display unit that controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.

## Description

### Technical Field

The present disclosure relates to a vehicle surrounding environment display device, a control method for a vehicle surrounding environment display device, and a program.

### Background Art

In the related art, Japanese Unexamined Patent Application Publication No. 2020-088697 is known as a technical document relating to a vehicle surrounding environment display device. This publication describes a surrounding monitoring device that generates a virtual space including a host vehicle icon and projects a surrounding environment of a vehicle into the virtual space as a three-dimensional image, in which a user can freely visually recognize the environment around the vehicle by operating a virtual viewpoint in the virtual space.

### Citation List

### Patent Literature

Patent Literature 1: Japanese Unexamined Patent Application Publication No. 2020-088697

### Summary of Invention

### Technical Problem

Incidentally, in the above-described related art device, the host vehicle image may be cut off from the image (displayed on the display) while the user freely operates the virtual viewpoint in the virtual space. If the user continues to operate the virtual viewpoint in a state where the host vehicle image is cut off, the user may lose a sense of position of the virtual viewpoint with respect to the host vehicle image.

### Solution to Problem

According to an aspect of the present disclosure, there is provided a vehicle surrounding environment display device that generates a virtual space corresponding to a surrounding environment of a host vehicle based on detection information of an external sensor of the host vehicle and displays an image in the virtual space as viewed from a virtual viewpoint operated by a user of the host vehicle on a display, in which a host vehicle icon corresponding to the host vehicle is placed in the virtual space, and the vehicle surrounding environment display device includes an image display unit that controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.

According to the vehicle surrounding environment display device according to the aspect of the present disclosure, by controlling the virtual viewpoint such that the virtual viewpoint more easily approaches the host vehicle icon as the operation distance or the cumulative operation time of the virtual viewpoint by the user becomes longer, even when the host vehicle icon is cut off from the image as viewed from the virtual viewpoint, the user can easily find the host vehicle icon through the user's operation, so that it is possible to suppress the user from losing a sense of position of the virtual viewpoint with respect to the host vehicle icon while ensuring a high degree of freedom of operation of the virtual viewpoint by the user.

In the vehicle surrounding environment display device according to the aspect of the present disclosure, the image display unit may bring a gaze point, which is a center of rotational movement of the virtual viewpoint in the virtual space, closer to the host vehicle icon as the operation distance of the virtual viewpoint by the user becomes longer. Further, the image display unit may bring the gaze point of the virtual viewpoint closer to the host vehicle icon as the cumulative operation time of the virtual viewpoint by the user becomes longer.

According to this vehicle surrounding environment display device, by bringing the gaze point of the virtual viewpoint closer to the host vehicle icon as the operation distance or the cumulative operation time of the virtual viewpoint becomes longer, a possibility that the host vehicle icon appears in the image as viewed from the virtual viewpoint through the user's operation increases, so that it is possible to suppress the user from losing a sense of position of the virtual viewpoint with respect to the host vehicle icon while ensuring a high degree of freedom of operation of the virtual viewpoint by the user.

In the vehicle surrounding environment display device according to the aspect of the present disclosure, the image display unit may set a gaze point control unnecessary area surrounding the host vehicle icon in the virtual space, perform gaze point control of bringing the gaze point of the virtual viewpoint closer to the host vehicle icon as the operation distance of the virtual viewpoint by the user while the gaze point is positioned outside the gaze point control unnecessary area becomes longer, or bringing the gaze point of the virtual viewpoint closer to the host vehicle icon as the cumulative operation time of the virtual viewpoint by the user while the gaze point is positioned outside the gaze point control unnecessary area becomes longer, and not perform the gaze point control while the gaze point is positioned inside the gaze point control unnecessary area.

According to this vehicle surrounding environment display device, since the gaze point control is not executed while the gaze point is positioned inside the gaze point control unnecessary area set to surround the host vehicle icon, it is possible to suppress degradation of operability for the user that would be caused by performing the gaze point control even when the gaze point is positioned in the vicinity of the host vehicle icon.

In the vehicle surrounding environment display device according to the aspect of the present disclosure, the image display unit shortens a distance between the gaze point and the virtual viewpoint as the operation distance of the virtual viewpoint by the user becomes longer, or shortens the distance between the gaze point and the virtual viewpoint as the cumulative operation time of the virtual viewpoint by the user becomes longer.

According to this vehicle surrounding environment display device, by shortening the distance between the gaze point and the virtual viewpoint as the operation distance or the cumulative operation time of the virtual viewpoint becomes longer, the virtual viewpoint also approaches the host vehicle icon in accordance with the approach of the gaze point to the host vehicle icon, so that it is possible to suppress the user from losing a sense of position of the virtual viewpoint with respect to the host vehicle icon while ensuring a high degree of freedom of operation of the virtual viewpoint by the user.

In the vehicle surrounding environment display device according to the aspect of the present disclosure, the image display unit decreases a depression angle of the virtual viewpoint as the operation distance of the virtual viewpoint by the user becomes longer, or decreases the depression angle of the virtual viewpoint as the cumulative operation time of the virtual viewpoint by the user becomes longer.

According to this vehicle surrounding environment display device, by decreasing the depression angle of the virtual viewpoint with respect to the gaze point as the operation distance or the cumulative operation time of the virtual viewpoint becomes longer, it is possible to suppress the user from losing a sense of position of the virtual viewpoint with respect to the host vehicle icon while ensuring a high degree of freedom of operation of the virtual viewpoint by the user.

According to another aspect of the present disclosure, there is provided a control method for a vehicle surrounding environment display device that generates a virtual space corresponding to a surrounding environment of a host vehicle based on detection information of an external sensor of the host vehicle and displays an image in the virtual space as viewed from a virtual viewpoint operated by a user of the host vehicle on a display, in which a host vehicle icon corresponding to the host vehicle is placed in the virtual space, and the control method controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.

According to the control method for the vehicle surrounding environment display device according to the other aspect of the present disclosure, by controlling the virtual viewpoint such that the virtual viewpoint more easily approaches the host vehicle icon as the operation distance or the cumulative operation time of the virtual viewpoint by the user becomes longer, even when the host vehicle icon is cut off from the image as viewed from the virtual viewpoint, the user can easily find the host vehicle icon through the user's operation, so that it is possible to suppress the user from losing a sense of position of the virtual viewpoint with respect to the host vehicle icon while ensuring a high degree of freedom of operation of the virtual viewpoint by the user.

According to still another aspect of the present disclosure, there is provided a program that causes an ECU of a host vehicle to operate as a vehicle surrounding environment display device that generates a virtual space corresponding to a surrounding environment of the host vehicle based on detection information of an external sensor of the host vehicle and displays an image in the virtual space as viewed from a virtual viewpoint operated by a user of the host vehicle on a display, in which the program places a host vehicle icon corresponding to the host vehicle in the virtual space, and controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.

According to the program according to the still another aspect of the present disclosure, by controlling the virtual viewpoint such that the virtual viewpoint more easily approaches the host vehicle icon as the operation distance or the cumulative operation time of the virtual viewpoint by the user becomes longer, even when the host vehicle icon is cut off from the image as viewed from the virtual viewpoint, the user can easily find the host vehicle icon through the user's operation, so that it is possible to suppress the user from losing a sense of position of the virtual viewpoint with respect to the host vehicle icon while ensuring a high degree of freedom of operation of the virtual viewpoint by the user.

### Advantageous Effects of Invention

According to each aspect of the present disclosure, it is possible to suppress the user from losing a sense of position of the virtual viewpoint with respect to the host vehicle icon while ensuring a high degree of freedom of operation of the virtual viewpoint by the user.

### Brief Description of Drawings

FIG. 1 is a block diagram illustrating a vehicle surrounding environment display device according to one embodiment.
FIG. 2 is a diagram for explaining a host vehicle icon and a virtual viewpoint.
FIG. 3 (a) is a diagram illustrating an example of rotational movement of the virtual viewpoint. (b) is a diagram illustrating an example of rotational movement of the virtual viewpoint when gaze point control is performed.
FIG. 4 is a diagram illustrating an example of rotational movement of the virtual viewpoint when a gaze point is positioned inside a gaze point control unnecessary area.
FIG. 5 is a diagram illustrating an example of gaze point control when the gaze point is positioned outside the gaze point control unnecessary area.
FIG. 6 is a diagram for explaining an automatic control intervention area.
FIG. 7 is a diagram for explaining the automatic control intervention area as viewed from a rear side of the host vehicle icon.
FIG. 8 is a flowchart illustrating an example of a control method for the vehicle surrounding environment display device according to the present embodiment.

### Description of Embodiments

Hereinafter, embodiments of the present disclosure will be described with reference to the drawings.

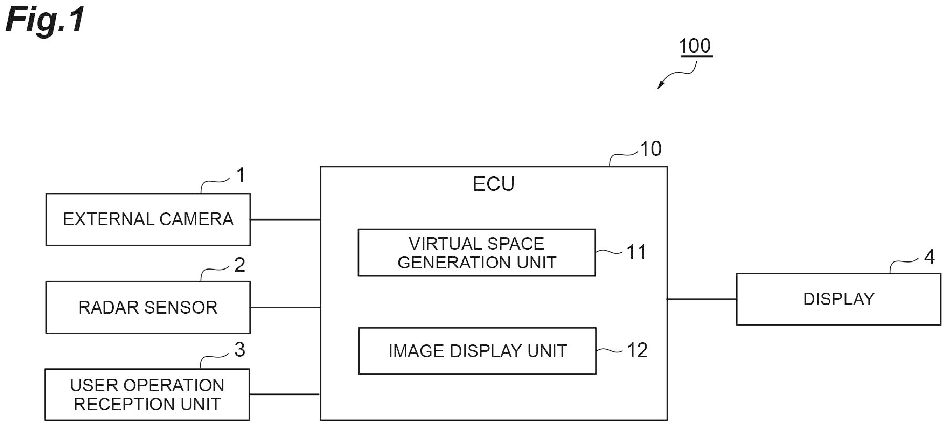

FIG. 1 is a block diagram illustrating a vehicle surrounding environment display device 100 according to one embodiment. The vehicle surrounding environment display device 100 shown in FIG. 1 is a device that is mounted on a vehicle such as a passenger car or a freight vehicle (hereinafter referred to as a host vehicle) and supports recognition of a surrounding environment of the vehicle by a user. The vehicle surrounding environment display device 100 generates a virtual space reflecting the surrounding environment of the host vehicle and displays an image in the virtual space as viewed from a virtual viewpoint operated by the user on a display. The vehicle surrounding environment display device 100 displays the surrounding environment of the host vehicle on the display as a so-called 3D view.

The user may be a driver of the host vehicle, may be a passenger of the host vehicle, or may be an owner of the host vehicle. The user may be an operator who performs remote support of the host vehicle through a remote assistance system. In the remote assistance system, the operator can make a traveling judgment (a judgment of proceeding, turning right or left, stopping, or the like) of the host vehicle or perform a driving operation of the host vehicle through remote assistance equipment provided outside the vehicle and capable of communicating with the host vehicle. The host vehicle is not limited to a vehicle capable of being remotely supported by the remote assistance system. The host vehicle may be a vehicle having an autonomous driving function or may be a vehicle not having an autonomous driving function.

[Configuration of Vehicle surrounding environment display device] As shown in FIG. 1, the vehicle surrounding environment display device 100 includes an ECU [Electronic Control Unit] 10 that comprehensively manages the device. The ECU 10 is an electronic control unit having a central processing unit (CPU) and a memory unit. The memory unit includes, for example, a read only memory (ROM), a random access memory (RAM), an EEPROM [Electrically Erasable Programmable Read-Only Memory], and the like. The ECU 10 implements various functions by, for example, executing a program stored in the memory unit with the CPU. The ECU 10 may be composed of a plurality of electronic units. The ECU 10 is connected to an external camera 1 (external sensor), a radar sensor 2 (external sensor), a user operation reception unit 3, and a display 4.

The external camera 1 is an imaging device that captures an external situation of the host vehicle. The external camera 1 includes, for example, a front camera that captures an image of a front side of the host vehicle, a rear camera that captures an image of a rear side of the host vehicle, and side cameras that capture images of right and left sides of the host vehicle. The number of cameras of the external camera 1 is not particularly limited and may be one. The external camera 1 transmits captured image information to the ECU 10.

The radar sensor 2 is a detection device that detects objects around the host vehicle using radio waves (for example, millimeter waves) or light. The radar sensor 2 can include a millimeter wave radar or a LIDAR [Light Detection and Ranging]. The radar sensor 2 transmits object detection information relating to the detected objects to the ECU 10. The radar sensor 2 and the external camera 1 constitute an external sensor for detecting the surrounding environment of the host vehicle. The object detection information of the radar sensor 2 or the captured image information of the external camera 1 corresponds to the detection information of the external sensor.

The user operation reception unit 3 is a device that receives an operation of the virtual viewpoint by the user. The user operation reception unit 3 can be, for example, an input unit of a human machine interface (HMI) provided in the host vehicle. The input unit includes, for example, a touch panel display, buttons, a lever, switches, and the like. Further, the user operation reception unit 3 may be capable of receiving an operation by voice recognition or gesture.

As the user operation reception unit 3, an input device of a mobile terminal or a computer communicatively connected to the host vehicle may be usable. Further, as the user operation reception unit 3, an operator terminal of the remote assistance system may be usable.

The display 4 is, for example, a center display mounted on a dashboard of the host vehicle. The display 4 may be a display of a tablet computer installable in the host vehicle, or may be a HUD [Head Up Display]. The display 4 is not limited to one mounted on the host vehicle. The display 4 may be an operator display of the remote assistance system provided in a facility remote from the host vehicle. The display 4 may be a display of a mobile terminal carried by the user, or may be a display of a tablet computer or a desktop computer of the user.

Next, a functional configuration of the ECU 10 will be described. As shown in FIG. 1, the ECU 10 has a virtual space generation unit 11 and an image display unit 12. A part of the functions of the ECU 10 described below may be executed by a server (for example, a server of the remote assistance system), a mobile terminal, or a computer (for example, a tablet computer or a desktop computer) capable of communicating with the host vehicle.

The virtual space generation unit 11 generates a virtual space corresponding to the surrounding environment of the host vehicle based on, for example, the captured image information of the external camera 1. The surrounding environment of the host vehicle includes, for example, positions of white lines of a lane on which the host vehicle runs. The surrounding environment of the host vehicle may include situations (positions, travel directions, and the like) of other vehicles such as a preceding vehicle and a vehicle traveling in parallel in an adjacent lane.

The virtual space is generated as, for example, a 3D image obtained by combining a plurality of images. A method of combining the images is not particularly limited. The virtual space generation unit 11 generates the virtual space as a 3D image by, for example, projecting each image onto a global coordinate system serving as a reference of the virtual space and associating overlapping pixels with each other.

The virtual space generation unit 11 places a host vehicle icon corresponding to the host vehicle in the virtual space. The host vehicle icon is placed as a three-dimensional icon. The host vehicle icon can be formed by polygon, voxel, or other CG processing. The virtual space generation unit 11 may generate the host vehicle icon reflecting a state of the host vehicle. The virtual space generation unit 11 may reflect a lighting state of lighting devices of the host vehicle (lighting states of a headlight, a turn signal, a brake light, and the like) in a lighting state of lighting devices in the host vehicle icon, and may reflect a steering angle of tires of the host vehicle in tires of the host vehicle icon.

When the virtual space generation unit 11 recognizes another vehicle based on the captured image information of the external camera 1, the virtual space generation unit 11 may place a three-dimensional other vehicle icon corresponding to the other vehicle in the virtual space. Similarly, the virtual space generation unit 11 may place a three-dimensional pedestrian icon in the virtual space. The virtual space generation unit 11 may recognize the other vehicle and the like based on the object detection information of the radar sensor 2 instead of the captured image information of the external camera 1, or may recognize the other vehicle and the like using both the external camera 1 and the radar sensor 2.

The virtual space generation unit 11 may recognize other vehicles and the like around the host vehicle using information of the surrounding environment recognized by the other vehicle through inter-vehicle communication. The virtual space generation unit 11 may acquire image information of cameras installed on roads and various traffic information by communicating with, for example, a traffic information management server managed by a government, and may recognize other vehicles and the like using these.

Further, the virtual space generation unit 11 may perform behavior prediction of the other vehicle based on the captured image information of the external camera 1 or the object detection information of the radar sensor 2, and may display a prediction result of the behavior of the other vehicle in association with the other vehicle icon. The virtual space generation unit 11 may display, for example, a predicted course of the other vehicle by an arrow icon or the like, or may display a predicted stop position of the other vehicle that is decelerating by a block-shaped icon or the like extending in a lane width direction. Similarly, the virtual space generation unit 11 may display a prediction result of the behavior of a pedestrian in association with the pedestrian icon.

The method of generating the virtual space is not limited to the method of combining a plurality of images of the external camera 1. The virtual space generation unit 11 does not need to generate the virtual space as a 3D image as long as the surrounding environment of the host vehicle can be recognized by the user. The virtual space generation unit 11 may generate the virtual space by arranging the host vehicle icon, white lines, and other vehicle icons so that positional relationships of the white lines and the other vehicles with respect to the host vehicle can be understood.

The image display unit 12 displays an image in the virtual space as viewed from the virtual viewpoint operated by the user in the virtual space generated by the virtual space generation unit 11 on the display 4. The image display unit 12 moves the virtual viewpoint 50 in accordance with the user's operation input to the user operation reception unit 3.

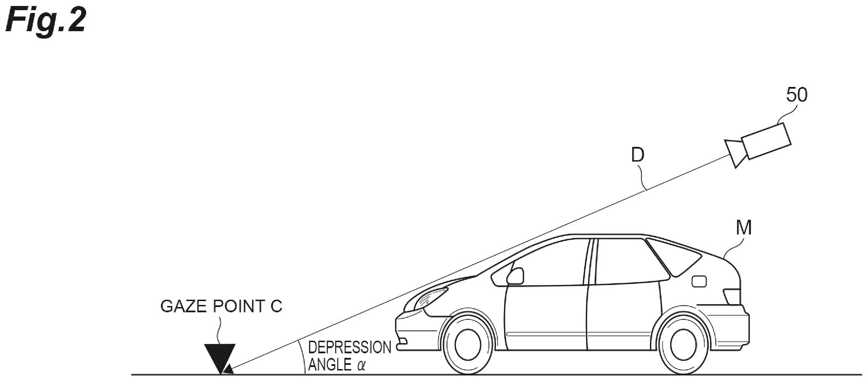

FIG. 2 is a diagram for explaining the host vehicle icon and the virtual viewpoint. FIG. 2 shows a host vehicle icon M and a virtual viewpoint 50. A plane on which the host vehicle icon M is placed corresponds to a horizontal plane of the global coordinate system. FIG. 2 shows a line of sight D of the virtual viewpoint 50, a gaze point C of the virtual viewpoint 50, and a depression angle α of the virtual viewpoint 50. In FIG. 2, the virtual viewpoint 50 is illustrated as a camera icon for ease of understanding. The depression angle α is an angle formed between the plane on which the host vehicle icon M is placed or the horizontal plane of the global coordinate system and the line of sight D in a vertical plane. The virtual viewpoint 50 does not need to be an icon.

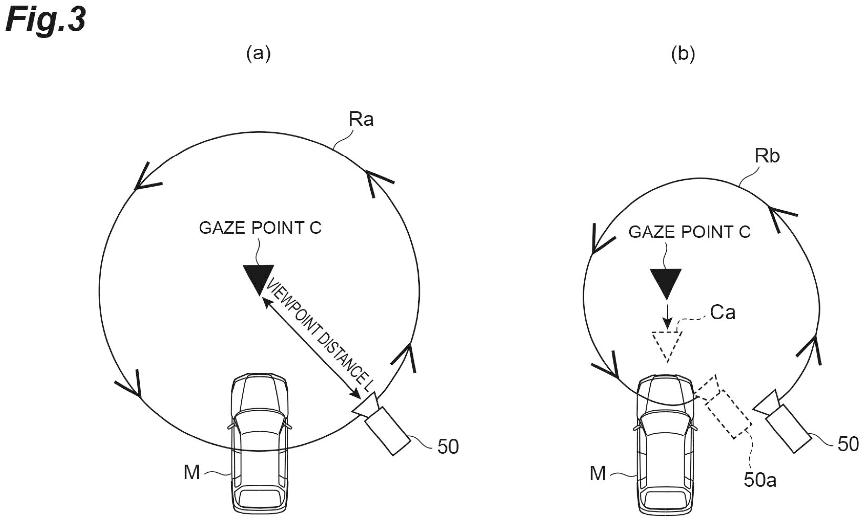

The gaze point C of the virtual viewpoint 50 is a point serving as a center of rotational movement of the virtual viewpoint 50 in the virtual space. When the user performs a horizontal rotation operation of the virtual viewpoint 50, the virtual viewpoint 50 moves so as to draw an arc centered on the gaze point C as viewed from above or below the host vehicle icon M (from a vertical direction of the global coordinate system). Here, FIG. 3(a) is a diagram illustrating an example of rotational movement of the virtual viewpoint. FIG. 3(a) is a view as seen from above the host vehicle icon M. FIG. 3(a) shows a trajectory Ra of the virtual viewpoint 50 moving so as to draw a circle with the gaze point C as a rotation center. Further, a straight-line distance between the gaze point C and the virtual viewpoint 50 is shown as a viewpoint distance L. In FIG. 3(a), the viewpoint distance L corresponds to a rotation radius of the circular trajectory Ra.

Similarly, the virtual viewpoint 50 is also capable of vertical rotation centered on the gaze point C. When the user performs a vertical rotation operation of the virtual viewpoint 50, the virtual viewpoint 50 moves so as to draw an arc centered on the gaze point C as viewed from a front-rear direction of the host vehicle icon M (from a horizontal direction of the global coordinate system) in FIG. 2. The virtual viewpoint 50 may also be capable of forward-backward movement along the line of sight D (enlargement and reduction of the image) and parallel movement in addition to the rotational movement. When no intervention control is being performed, the virtual viewpoint 50 is movable to any position in the virtual space and can face any direction by the user's operation.

An initial position is set for the virtual viewpoint 50. The initial position is, for example, a position looking down at the host vehicle icon M from above and behind the host vehicle icon M. The initial position is not particularly limited as long as the host vehicle icon M is displayed on the display 4 at the initial position. The initial position may be changeable by the user.

The image display unit 12 controls the virtual viewpoint 50 such that the virtual viewpoint 50 more easily approaches the host vehicle icon M as the operation distance of the virtual viewpoint 50 by the user becomes longer. The operation distance is a distance over which the virtual viewpoint 50 has moved in the virtual space by the user's operation. The image display unit 12 may reset the count of the operation distance when a state in which no user operation is input continues for a predetermined time.

Specifically, the image display unit 12 indirectly controls the virtual viewpoint 50 so as to more easily approach the host vehicle icon M by performing gaze point control (intervention control) of bringing the gaze point C of the virtual viewpoint 50 closer to the host vehicle icon M as the operation distance of the virtual viewpoint 50 becomes longer. The gaze point control is not performed while the user stops the operation.

In the gaze point control, a degree of approach of the gaze point C in accordance with the operation distance (easiness of approaching the host vehicle icon M) may be a fixed value or may be a variable value. Specifically, the image display unit 12 may be configured such that the gaze point C approaches the host vehicle icon M by a predetermined distance while the operation distance increases by a certain distance. The image display unit 12 may be configured such that the gaze point C approaches the host vehicle icon M by a predetermined proportion of an entire separation distance between the gaze point C and the host vehicle icon M while the operation distance increases by a certain distance.

Alternatively, the image display unit 12 may be configured such that a distance by which the gaze point C approaches the host vehicle icon M increases at an accelerating rate as the operation distance becomes longer. That is, the image display unit 12 causes the virtual viewpoint 50 to more easily approach the host vehicle icon M at an accelerating rate as the operation distance becomes longer. The image display unit 12 may vary the distance by which the gaze point C is brought closer to the host vehicle icon M in accordance with the operation distance by using table data or a calculation formula in which the operation distance and the distance by which the gaze point C is brought closer to the host vehicle icon M are associated in advance. A proportion of the entire separation distance between the gaze point C and the host vehicle icon M may be used instead of the distance. The degree of approach of the gaze point C can be set in a manner that causes less discomfort to the user. The degree of approach of the gaze point C may be adjustable by the user.

Further, the image display unit 12 may perform control of the viewpoint distance L (rotation radius) between the virtual viewpoint 50 and the gaze point C in the gaze point control. Specifically, the image display unit 12 shortens the viewpoint distance L as the operation distance of the virtual viewpoint 50 becomes longer in the gaze point control. As a result, the virtual viewpoint 50 and the gaze point C approach each other as the operation distance of the virtual viewpoint 50 becomes longer, and in combination with the gaze point C approaching the host vehicle icon M, the host vehicle icon M more easily appears in the image as viewed from the virtual viewpoint 50.

Furthermore, the image display unit 12 may perform control of the depression angle α of the virtual viewpoint 50 in the gaze point control. Specifically, the image display unit 12 decreases the depression angle α of the virtual viewpoint 50 as the operation distance of the virtual viewpoint 50 by the user becomes longer. As a result, the position of the virtual viewpoint 50 becomes lower as the operation distance of the virtual viewpoint 50 becomes longer, so that the host vehicle icon M more easily appears in the image as viewed from the virtual viewpoint 50 compared to a case where the virtual viewpoint 50 looks down from a high position.

Here, FIG. 3(b) is a diagram illustrating an example of rotational movement of the virtual viewpoint 50 when the gaze point control is performed. FIG. 3(b) shows a trajectory Rb of the rotational movement of the virtual viewpoint 50 when the gaze point control is performed. Further, a position 50a of the virtual viewpoint 50 after the rotational movement and a position Ca of the gaze point C after the movement are shown by dashed lines. In FIG. 3(b), it is assumed that the user inputs only an operation of rotational movement in a clockwise direction.

In FIG. 3(b), the image display unit 12 controls the gaze point C to approach the host vehicle icon M in conjunction with the rotational movement of the virtual viewpoint 50. Further, the image display unit 12 controls the viewpoint distance L between the virtual viewpoint 50 and the gaze point C to become shorter in conjunction with the rotational movement of the virtual viewpoint 50. Furthermore, the image display unit 12 controls the depression angle α of the virtual viewpoint 50 to become smaller in conjunction with the rotational movement of the virtual viewpoint 50. As a result, the virtual viewpoint 50 performs the rotational movement while gradually approaching the host vehicle icon M as shown in the trajectory Rb in FIG. 3(b), and the depression angle α also becomes smaller, so that the host vehicle icon M appears in the image as viewed from the virtual viewpoint 50.

The user can input an operation to freely move the virtual viewpoint 50 even during the gaze point control. On the other hand, since the gaze point C, which is the rotation center of the virtual viewpoint 50, is brought closer to the host vehicle icon M, the host vehicle icon M more easily appears in the image in the virtual space as viewed from the virtual viewpoint 50. In other words, the host vehicle icon M becomes less likely to be cut off from the image displayed on the display 4.

The image display unit 12 may allow the user to perform an operation of moving the virtual viewpoint 50 together with the gaze point C during the gaze point control. In this case, both the user's operation and the gaze point control are reflected in the movement of the gaze point C. When the user continues an operation of moving the gaze point C away from the host vehicle icon M for a predetermined time or longer, the gaze point C may be moved with priority given to the user's operation. Even in this case, since the gaze point C is positioned on the host vehicle icon M side as viewed from the virtual viewpoint 50, the host vehicle icon M appears in the image as viewed from the virtual viewpoint 50.

The image display unit 12 may use a cumulative operation time of the virtual viewpoint 50 by the user instead of the operation distance of the virtual viewpoint 50 by the user. The cumulative operation time is a total value of time during which the virtual viewpoint 50 is moving in the virtual space by the user's operation. The cumulative operation time is not counted while the user stops the operation of the virtual viewpoint 50. The image display unit 12 may reset the count of the cumulative operation time when a state in which no user operation is input continues for a predetermined time.

In this case, the image display unit 12 controls the virtual viewpoint 50 such that the virtual viewpoint 50 more easily approaches the host vehicle icon M as the cumulative operation time of the virtual viewpoint 50 by the user becomes longer. The image display unit 12 performs gaze point control (intervention control) of bringing the gaze point C closer to the host vehicle icon M as the cumulative operation time of the virtual viewpoint 50 becomes longer. The image display unit 12 may shorten the viewpoint distance L as the cumulative operation time of the virtual viewpoint 50 becomes longer in the gaze point control. The image display unit 12 may decrease the depression angle α as the cumulative operation time of the virtual viewpoint 50 becomes longer in the gaze point control.

Next, determination of unnecessity of the gaze point control will be described. The image display unit 12 may be configured not to execute the gaze point control when a predetermined condition is satisfied. Specifically, the image display unit 12 may set a gaze point control unnecessary area in which the gaze point control is not executed.

The gaze point control unnecessary area is an area in which the gaze point control is not performed when the gaze point C is included in the area. The gaze point control unnecessary area is set so as to include the host vehicle icon M in the virtual space. The gaze point control unnecessary area may be set as a rectangular area as viewed from directly above the host vehicle icon M centered on the host vehicle icon M, or may be set as an area within a certain distance from the host vehicle icon M. A position of the host vehicle icon M within the gaze point control unnecessary area is not particularly limited.

When the gaze point control unnecessary area is set, the image display unit 12 does not perform the gaze point control while the gaze point C is positioned inside the gaze point control unnecessary area. The image display unit 12 does not need to count the operation distance of the virtual viewpoint 50 by the user while the gaze point control is not performed (while the gaze point C is positioned inside the gaze point control unnecessary area).

The image display unit 12 starts counting the operation distance of the virtual viewpoint 50 by the user while the gaze point C is positioned outside the gaze point control unnecessary area. The image display unit 12 executes the gaze point control of bringing the gaze point C closer to the host vehicle icon M as the operation distance of the virtual viewpoint 50 by the user becomes longer when the gaze point C is positioned outside the gaze point control unnecessary area. When the gaze point C enters the gaze point control unnecessary area during execution of the gaze point control, the image display unit 12 resets or temporarily suspends the count of the operation distance. The same applies when the cumulative operation time is used for the gaze point control instead of the operation distance.

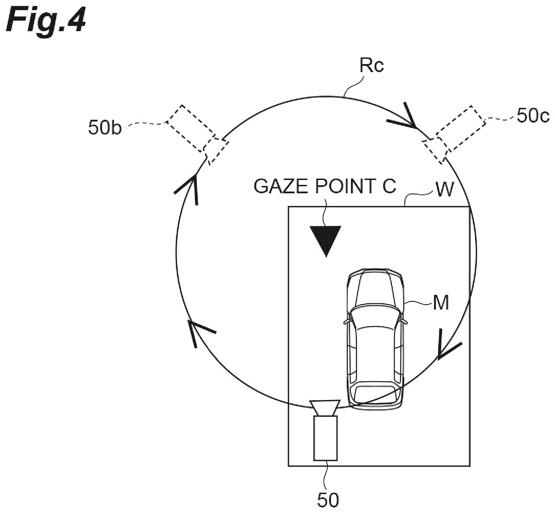

Here, FIG. 4 is a diagram illustrating an example of rotational movement of the virtual viewpoint when the gaze point C is positioned inside the gaze point control unnecessary area. In FIG. 4, the user inputs only an operation of rotational movement in a clockwise direction. FIG. 4 shows a gaze point control unnecessary area W, a trajectory Rc of the virtual viewpoint 50, a first position 50b and a second position 50c of the virtual viewpoint 50 after the rotational movement. As shown in FIG. 4, since the gaze point control is not performed when the gaze point C is positioned inside the gaze point control unnecessary area W, the virtual viewpoint 50 performs the rotational movement along the trajectory Rc drawing a circle centered on the gaze point C that does not move.

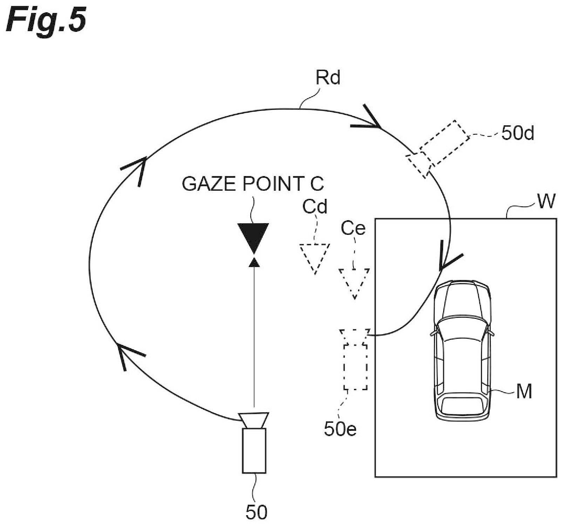

FIG. 5 is a diagram illustrating an example of the gaze point control when the gaze point C is positioned outside the gaze point control unnecessary area W. In FIG. 5 as well, the user inputs only an operation of rotational movement in a clockwise direction. FIG. 5 shows a trajectory Rd of the virtual viewpoint 50, a third position 50d and a fourth position 50e of the virtual viewpoint 50 after the rotational movement. Further, a position Cd of the gaze point C corresponding to the third position 50d of the virtual viewpoint 50 and a position Ce of the gaze point C corresponding to the fourth position 50e of the virtual viewpoint 50 are shown.

As shown in FIG. 5, the gaze point control is executed when the gaze point C of the virtual viewpoint 50 moves outside the gaze point control unnecessary area W. The gaze point C is controlled to gradually approach the host vehicle icon M in conjunction with the rotational movement of the virtual viewpoint 50. The gaze point control shown in FIG. 5 also includes control of the viewpoint distance L. The gaze point control may include control of the depression angle α.

The image display unit 12 may determine whether execution of the gaze point control is necessary based on the position of the virtual viewpoint 50 instead of the position of the gaze point C. The image display unit 12 may be configured to execute the gaze point control when the virtual viewpoint 50 is positioned outside the gaze point control unnecessary area W, and not to execute the gaze point control when the virtual viewpoint 50 is positioned inside the gaze point control unnecessary area W.

Alternatively, the image display unit 12 may be configured to determine whether execution of the gaze point control is necessary using both the position of the virtual viewpoint 50 and the position of the gaze point C. The image display unit 12 may execute the gaze point control of the virtual viewpoint 50 when either one of the virtual viewpoint 50 or the gaze point C is positioned outside the gaze point control unnecessary area W.

The image display unit 12 does not necessarily need to use the gaze point control unnecessary area W for the determination of unnecessity of the gaze point control. The image display unit 12 may be configured not to execute the gaze point control while a distance between the gaze point C and the host vehicle icon M is less than a first distance threshold value. The image display unit 12 may be configured not to execute the gaze point control while a distance between the virtual viewpoint 50 and the host vehicle icon M is less than a second distance threshold value. Each threshold value is a threshold value having a value set in advance.

Next, automatic control of the virtual viewpoint 50 will be described. The image display unit 12 may automatically control a position and an orientation of the virtual viewpoint 50 so that the host vehicle icon M appears on the screen when a predetermined condition is satisfied.

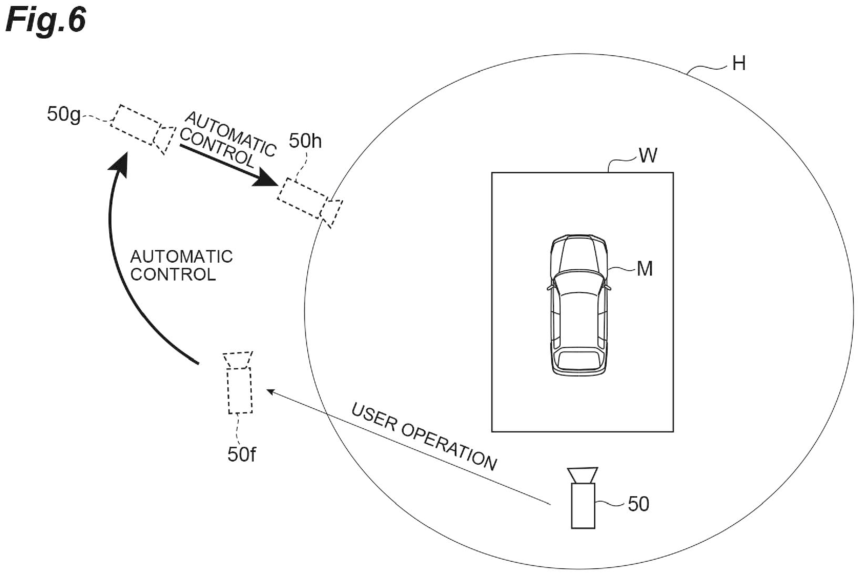

Here, FIG. 6 is a diagram for explaining the automatic control intervention area. FIG. 6 shows an automatic control intervention area H, a fifth position 50f, a sixth position 50g, and a seventh position 50h of the virtual viewpoint 50. The automatic control intervention area H is, for example, an area within a certain distance from the host vehicle icon M. The automatic control intervention area H may be set as a rectangular area similarly to the gaze point control unnecessary area W.

In FIG. 6, it is assumed that the virtual viewpoint 50 has moved from the initial position to the fifth position 50f by the user's operation. The fifth position 50f is a position outside the automatic control intervention area H. In this case, the image display unit 12 executes the automatic control of the virtual viewpoint 50. Specifically, the image display unit 12 automatically moves the virtual viewpoint 50 to the sixth position 50g. At the sixth position 50g, the virtual viewpoint 50 is moved so that the virtual viewpoint 50 faces the host vehicle icon M. Thereafter, the image display unit 12 moves the virtual viewpoint 50 to the seventh position 50h so that the host vehicle icon M as viewed from the virtual viewpoint 50 is enlarged. The seventh position 50h is a position where the virtual viewpoint 50 enters the automatic control intervention area H.

As shown in FIG. 6, the image display unit 12 automatically controls the position and the orientation of the virtual viewpoint 50 when the virtual viewpoint 50 is separated from the host vehicle icon M by a certain distance or more, thereby enabling the user to notice the position of the host vehicle icon M when the user has lost sight of the host vehicle icon M. The image display unit 12 may be configured to automatically move the virtual viewpoint 50 to the initial position.

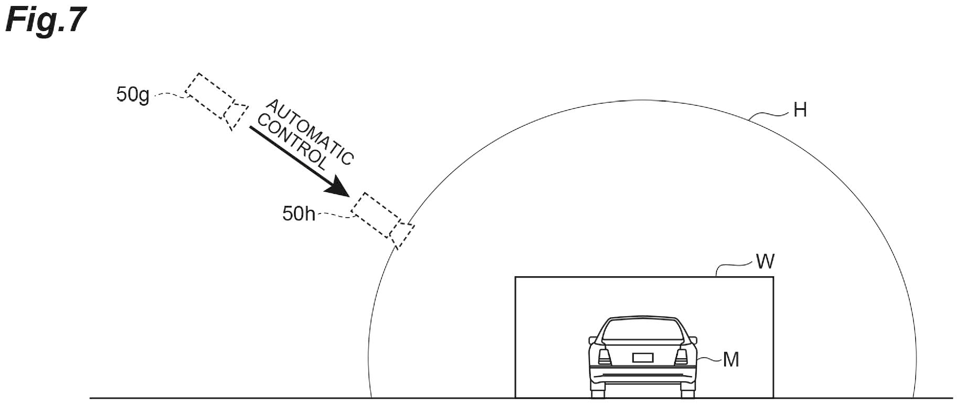

FIG. 7 is a diagram for explaining the automatic control intervention area H as viewed from a rear side of the host vehicle icon M. As shown in FIG. 7, the automatic control intervention area H and the gaze point control unnecessary area W can be set as three-dimensional areas having a defined height. The automatic control intervention area H and the gaze point control unnecessary area W may be areas set with respect to a horizontal plane (areas having no height). In this case, whether or not the automatic control is to be executed is determined based on whether or not the position of the virtual viewpoint 50 projected onto the horizontal plane is included in the automatic control intervention area H.

The image display unit 12 may determine whether execution of the automatic control is necessary based on the position of the gaze point C instead of the position of the virtual viewpoint 50. The image display unit 12 does not execute the automatic control of the virtual viewpoint 50 even when the virtual viewpoint 50 is positioned outside the automatic control intervention area H, if the gaze point C of the virtual viewpoint 50 is positioned inside the automatic control intervention area H. The image display unit 12 executes the automatic control of the virtual viewpoint 50 even when the virtual viewpoint 50 is positioned inside the automatic control intervention area H, if the gaze point C is positioned outside the automatic control intervention area H, because there is a possibility that the user has lost sight of the host vehicle icon M.

Alternatively, the image display unit 12 may determine whether to execute the automatic control using both the position of the virtual viewpoint 50 and the position of the gaze point C. The image display unit 12 may execute the automatic control of the virtual viewpoint 50 when either one of the virtual viewpoint 50 or the gaze point C is positioned outside the automatic control intervention area H.

The image display unit 12 may use, as a condition for executing the automatic control, the fact that the host vehicle icon M is cut off from the image as viewed from the virtual viewpoint 50, in addition to the distance between the virtual viewpoint 50 or the gaze point C and the host vehicle icon M. The image display unit 12 can consider that the sense of position of the virtual viewpoint 50 with respect to the host vehicle icon M has not been lost even when the virtual viewpoint 50 is significantly separated from the host vehicle icon M, if the host vehicle icon M is shown in the image. For this reason, the image display unit 12 may not execute the automatic control of the virtual viewpoint 50 with priority given to the user's operation even when the virtual viewpoint 50 or the gaze point C is positioned outside the automatic control intervention area H, if the host vehicle icon M is shown in the image.

[Program] The program causes the ECU 10 to function (operate) as the above-described virtual space generation unit 11 and the image display unit 12. The program is provided by, for example, a non-transitory recording medium such as a ROM or a semiconductor memory. Further, the program may be provided via communication such as a network.

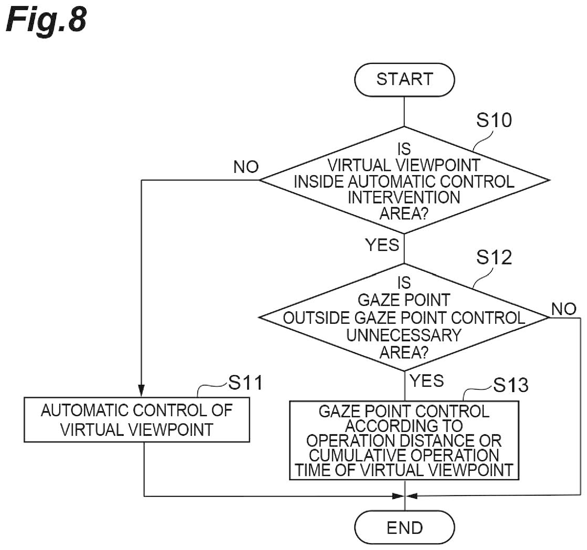

[Control Method for Vehicle surrounding environment display device] Next, a control method for the vehicle surrounding environment display device 100 according to the present embodiment will be described with reference to the drawings. FIG. 8 is a flowchart illustrating an example of the control method for the vehicle surrounding environment display device 100 according to the present embodiment.

As shown in FIG. 8, the ECU 10 of the vehicle surrounding environment display device 100 determines, as S10, whether the virtual viewpoint 50 is positioned inside the automatic control intervention area H by the image display unit 12. When the ECU 10 does not determine that the virtual viewpoint 50 is positioned inside the automatic control intervention area H (S10: NO), the procedure proceeds to S11. When the ECU 10 determines that the virtual viewpoint 50 is positioned inside the automatic control intervention area H (S10: YES), the procedure proceeds to S12.

In S11, the ECU 10 executes the automatic control of the virtual viewpoint 50 by the image display unit 12. The image display unit 12 automatically moves the virtual viewpoint 50 to, for example, a position where the host vehicle icon M is shown on the screen of the display 4. Thereafter, the ECU 10 terminates the current control.

In S12, the ECU 10 determines, by the image display unit 12, whether the gaze point C is positioned outside the gaze point control unnecessary area W. When the ECU 10 does not determine that the gaze point C is positioned outside the gaze point control unnecessary area W (S12: NO), the ECU 10 terminates the current control. When the ECU 10 determines that the gaze point C is positioned outside the gaze point control unnecessary area W (S12: YES), the procedure proceeds to S13.

In S13, the ECU 10 executes gaze point control in accordance with the operation distance or the cumulative operation time of the virtual viewpoint 50 by the user through the image display unit 12. The image display unit 12 executes, for example, gaze point control of bringing the gaze point C of the virtual viewpoint 50 closer to the host vehicle icon M as the operation distance of the virtual viewpoint 50 becomes longer. The image display unit 12 may control the viewpoint distance L and the depression angle α of the virtual viewpoint 50 in the gaze point control. Thereafter, the ECU 10 terminates the current control.

The vehicle surrounding environment display device 100 does not necessarily need to perform the determination of S10. In this case, the processing of S11 is unnecessary. Further, the vehicle surrounding environment display device 100 does not necessarily need to perform the determination of S12, and may always execute the gaze point control.

According to the vehicle surrounding environment display device 100 according to the present embodiment described above, by controlling the virtual viewpoint 50 such that the virtual viewpoint 50 more easily approaches the host vehicle icon M as the operation distance or the cumulative operation time of the virtual viewpoint 50 by the user becomes longer, even when the host vehicle icon M is cut off from the image as viewed from the virtual viewpoint 50, the user can easily find the host vehicle icon M through the user's operation, so that it is possible to suppress the user from losing a sense of position of the virtual viewpoint 50 while ensuring a high degree of freedom of operation of the virtual viewpoint 50 by the user.

Further, according to the vehicle surrounding environment display device 100, by bringing the gaze point C of the virtual viewpoint 50 closer to the host vehicle icon M as the operation distance or the cumulative operation time of the virtual viewpoint 50 becomes longer, a possibility that the host vehicle icon M appears in the image as viewed from the virtual viewpoint 50 through the user's operation increases, so that it is possible to suppress the user from losing a sense of position of the virtual viewpoint 50 while ensuring a high degree of freedom of operation of the virtual viewpoint 50 by the user.

Furthermore, according to the vehicle surrounding environment display device 100, since the gaze point control is not executed while the gaze point C is positioned inside the gaze point control unnecessary area W set to surround the host vehicle icon M, it is possible to suppress degradation of operability for the user that would be caused by performing the gaze point control even when the gaze point C is positioned in the vicinity of the host vehicle icon M.

Further, according to the vehicle surrounding environment display device 100, by shortening the viewpoint distance L, which is the distance between the gaze point C and the virtual viewpoint 50, as the operation distance or the cumulative operation time of the virtual viewpoint 50 becomes longer, the virtual viewpoint 50 also approaches the host vehicle icon M in accordance with the approach of the gaze point C to the host vehicle icon M, so that it is possible to suppress the user from losing a sense of position of the virtual viewpoint 50 while ensuring a high degree of freedom of operation of the virtual viewpoint 50 by the user.

Further, according to the vehicle surrounding environment display device 100, by decreasing the depression angle α of the virtual viewpoint 50 with respect to the gaze point C as the operation distance or the cumulative operation time of the virtual viewpoint 50 becomes longer, it is possible to suppress the user from losing a sense of position of the virtual viewpoint 50 while ensuring a high degree of freedom of operation of the virtual viewpoint 50 by the user.

Although the embodiments of the present invention have been described above, the present invention is not limited to the above-described embodiments. The present invention can be implemented in various forms with various modifications and improvements based on the knowledge of those skilled in the art, including the above-described embodiments.

The vehicle surrounding environment display device 100 may be configured to directly control the virtual viewpoint 50 so as to more easily approach the host vehicle icon M, instead of the above-described gaze point control. The vehicle surrounding environment display device 100 may perform intervention control so that the position of the virtual viewpoint 50 approaches the host vehicle icon M as the operation distance or the cumulative operation time of the virtual viewpoint 50 by the user becomes longer, without using the gaze point C.

The vehicle surrounding environment display device 100 may control the virtual viewpoint 50 to more easily approach the host vehicle icon M by increasing a resistance of an operation of moving the virtual viewpoint 50 in a direction away from the host vehicle icon M and decreasing a resistance of an operation of moving the virtual viewpoint 50 in a direction approaching the host vehicle icon M or setting the resistance to zero, as the operation distance or the cumulative operation time of the virtual viewpoint 50 by the user becomes longer.

### Reference Signs List

1 ... external camera, 2 ... radar sensor, 3 ... user operation reception unit, 4 ... display, 10 ... ECU, 11 ... virtual space generation unit, 12 ... image display unit, 50 ... virtual viewpoint, 100 ... vehicle surrounding environment display device.

## Claims

1. A vehicle surrounding environment display device that generates a virtual space corresponding to a surrounding environment of a host vehicle based on detection information of an external sensor of the host vehicle and displays an image in the virtual space as viewed from a virtual viewpoint operated by a user of the host vehicle on a display,
wherein a host vehicle icon corresponding to the host vehicle is placed in the virtual space,
and the vehicle surrounding environment display device comprises an image display unit that controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.

2. The vehicle surrounding environment display device according to claim 1,
wherein the image display unit brings a gaze point, which is a rotation center of the virtual viewpoint in the virtual space, closer to the host vehicle icon as the operation distance of the virtual viewpoint by the user becomes longer, or brings the gaze point of the virtual viewpoint closer to the host vehicle icon as the cumulative operation time of the virtual viewpoint by the user becomes longer.

3. The vehicle surrounding environment display device according to claim 2,
wherein the image display unit sets a gaze point control unnecessary area surrounding the host vehicle icon in the virtual space, performs gaze point control of bringing the gaze point of the virtual viewpoint closer to the host vehicle icon as the operation distance of the virtual viewpoint by the user while the gaze point is positioned outside the gaze point control unnecessary area becomes longer, or bringing the gaze point of the virtual viewpoint closer to the host vehicle icon as the cumulative operation time of the virtual viewpoint by the user while the gaze point is positioned outside the gaze point control unnecessary area becomes longer, and does not perform the gaze point control while the gaze point is positioned inside the gaze point control unnecessary area.

4. The vehicle surrounding environment display device according to claim 2,
wherein the image display unit shortens a distance between the gaze point and the virtual viewpoint as the operation distance of the virtual viewpoint by the user becomes longer, or shortens the distance between the gaze point and the virtual viewpoint as the cumulative operation time of the virtual viewpoint by the user becomes longer.

5. The vehicle surrounding environment display device according to claim 2, wherein the image display unit decreases a depression angle of the virtual viewpoint as the operation distance of the virtual viewpoint by the user becomes longer, or decreases the depression angle of the virtual viewpoint as the cumulative operation time of the virtual viewpoint by the user becomes longer.

6. A control method for a vehicle surrounding environment display device that generates a virtual space corresponding to a surrounding environment of a host vehicle based on detection information of an external sensor of the host vehicle and displays an image in the virtual space as viewed from a virtual viewpoint operated by a user of the host vehicle on a display,
wherein a host vehicle icon corresponding to the host vehicle is placed in the virtual space,
and the control method controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.

7. A program that causes an ECU of a host vehicle to operate as a vehicle surrounding environment display device that generates a virtual space corresponding to a surrounding environment of the host vehicle based on detection information of an external sensor of the host vehicle and displays an image in the virtual space as viewed from a virtual viewpoint operated by a user of the host vehicle on a display,
wherein the program places a host vehicle icon corresponding to the host vehicle in the virtual space,
and controls the virtual viewpoint such that the virtual viewpoint more easily approaches the host vehicle icon as an operation distance of the virtual viewpoint by the user becomes longer, or controls the virtual viewpoint such that the virtual viewpoint more easily approaches the host vehicle icon as a cumulative operation time of the virtual viewpoint by the user becomes longer.
